Europäisches Patentamt

European Patent Office

Office européen des brevets

(19)

(11) Veröffentlichungsnummer: **0 238 681
B1**

(12) **EUROPÄISCHE PATENTSCHRIFT**

(45) Veröffentlichungstag der Patentschrift:
13.12.89

(21) Anmeldenummer: 86104018.6

(22) Anmeldetag: 24.03.86

(51) Int. Cl.⁴: **H05K 7/14,** H05K 7/18,
H05K 7/20, H05K 9/00

(54) Prozessanalysator-System für Industrielle Prozesse.

(43) Veröffentlichungstag der Anmeldung:
30.09.87 Patentblatt 87/40

(45) Bekanntmachung des Hinweises auf die Patenterteilung:
13.12.89 Patentblatt 89/50

(84) Benannte Vertragsstaaten:
DE FR GB IT NL

(56) Entgegenhaltungen:
DE-A- 2 324 755
DE-A- 2 734 614
DE-A- 3 426 102
DE-B- 1 904 596
DE-B- 2 214 537
DE-B- 2 316 933

ANALYSER-SHELTER, Ausgabe 11/81; FA. BENKE
"Analyser-shelter for the chemical and petrochemical
industries completely equipped with: Analysers
samplings systems distribution racks, cabinets,
control-panels"

(73) Patentinhaber: **Benke Instrument & Elektro AG,
Rütiweg 9, CH-4133 Pratteln(CH)**

(72) Der Erfinder hat auf seine Nennung verzichtet

(74) Vertreter: **Weber, Otto Ernst, Dipl.-Phys.,
Hofbrunnstrasse 36, D-8000 München 71(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein explosionsgeschütztes Prozeßanalysator-System mit Aggregaten der Prozeßinstrumentierung/Automatisierung, mit mindestens einem Prozeßanalysator und mit einer Schutzeinrichtung zum Einsatz in einer gefährlichen Umgebung, beispielsweise einer brennbaren oder explosionsfähigen Umgebung und/oder zum Einsatz mit gefährlichen Stoffen, beispielsweise gesundheitsschädlichen Stoffen.

Die Schutzeinrichtung schützt die Umgebung des Analysator-Systems und das Bedienungspersonal vor gefährlichen Stoffen, die sich in den Aggregaten befinden. Umgekehrt schützt sie auch die Meßeinrichtungen vor gefährlichen Stoffen in der Umgebung. Dies ist insbesondere bei sogenannten Freiluftanlagen, wie Raffinerien oder Explorationsstellen als auch bei Gebäudeanlagen in der chemischen und pharmazeutischen Industrie von Bedeutung.

Die Prozeßinstrumentierungs-und automatisierungsaggregate dienen der Messung, Regelung und Steuerung von Prozeßabläufen. Mit Prozeßanalysatoren werden automatische Analysen von Stoffen oder Stoffproben durchgeführt. Dafür ist die Bereitstellung und Zuführung von Probenaufbereitungssystemen, Hilfsstoffsystemen und Entsorgungssystemen erforderlich. Neben Prozessen der Kohlenwasserstoff-Industrie können Prozeßanalysator-Systeme ebenso bei Prozessen der Sprengstoffverarbeitung, bei Prozessen mit staubförmigen, toxischen, kanzerogenen oder anderweitig gesundheitsschädlichen und gefährlichen Stoffen eingesetzt werden. Die dabei verwendeten Anlagen werden nach der Gewerbeordnung als überwachungsbedürftig bezeichnet.

Als Analyseverfahren bzw. Meßverfahren kommen die bekannten chemischen Analysen zur Feststellung von chemischen Affinitäten oder Reaktionen und elektrochemische Meßverfahren, wie beispielsweise Potentiometrie, Coulometrie, Voltametrie, Amperometrie oder Polarographie, häufig im Zusammenhang mit Titrationen, in Betracht. Ferner kann die Wechselwirkung von Atomen und Molekülen mit elektromagnetischer Strahlung, die Anregung von Elektronenübergängen und Energiezuständen durch Energieeinstrahlung und die Emission und Absorption Gegenstand von Analysen sein. Auch die Reaktion des zu untersuchenden Stoffes auf elektrische oder magnetische Felder, das Massenspektrum, die elektrische Leitfähigkeit, die Dielektrizität und der Paramagnetismus können in einem Prozeßanalysator untersucht werden. Nicht zuletzt werden thermische und mechanische Größen gemessen.

Es ist bekannt, derartige Analysator-Systeme in zentralen oder dezentralen Laboratorien unterzubringen. Wird die Analyse an einem zentralen Ort innerhalb der Verarbeitungsbetriebes durchgeführt, so müssen die Proben aus dem Prozeß einzeln entnommen und von einer Person in das Labor zur Eingabe in das Analysator-System transportiert werden. Während des Transportes kann sich jedoch der Zustand der Probe ändern. Ferner ist nachteilig, daß eine zeitliche Verzögerung zwischen der Probenentnahme und der Analyse unvermeidlich ist. Außerdem ist nachteilig, daß nur Einzelproben analysiert werden können, so daß lediglich stochastische Messungen möglich sind.

Man versucht deshalb, das Analysator-System möglichst vor Ort aufzustellen und zu betreiben, was die Möglichkeit bietet, Prozeßanalysatoren für kontinuierliche Analysen einzusetzen, wobei das Meßverfahren dabei sowohl kontinuierlich als auch diskontinuierlich mit endlichen Meßzyklen sein kann. Dazu ist es bekannt, das System in einem ortsfesten gemauerten oder aus einem transportablen Container bestehenden sogenannten "Analysenhaus" unterzubringen. Ein derartiges transportables Analysenhaus ist beispielsweise in der Firmenschrift der Firma Benke "Analyzer-Shelter", Ausgabe 11/81 beschrieben. Diese Analyse-Häuser sind zur Bedienung und Wartung der Analysatoren und der Hilfseinrichtung begehbar ausgebildet. Obwohl sie für viele Anwendungsfälle bestens geeignet sind, kann eine derartige relativ großvolumige Anordnung auch Nachteile haben.

Einer dieser Nachteile ergibt sich dadurch, daß im Hinblick auf die gefährlichen und gesundheitsschädlichen Stoffe aufwendige Schutzvorkehrungen getroffen werden müssen. Der Schutzaufwand ist daher beträchtlich größer als beispielsweise bei lediglich elektrische Signale verarbeitenden Instrumentierungseinrichtungen. Für diese ist praktisch nur ein adäquater Explosionsschutz und eventuell ein Schutz vor Eindringen der äußeren Atmosphäre erforderlich.

Prozeßanalysatoren zur Aufstellung in einem explosionsgefährdeten Bereich müssen den in den Bestimmungen des Explosionsschutzes aufgeführten Schutzarten und Konstruktionsmerkmalen genügen. Diese sind in den folgenden Vorschriften niedergelegt: VDE 0 165, 0 171; EN 50014 bis 50020, 50028, 50039 und IEC 79-10.

Umgekehrt müssen Prozeßanalysatoren aus meßtechnischen Gründen, um die Meßgenauigkeit, die Stabilität und Wiederholbarkeit der Messung zu gewährleisten und um die vorzeitige Alterung von elektronischen Bauelementen zu verhindern, vor Umgebungseinflüssen geschützt werden. Aus wirtschaftlichen und sicherheitstechnischen Gründen ist neben dem Witterungsschutz auch ein Schutz vor aggressiver oder porosiver Atmosphäre angebracht.

In der Praxis wird der Schutz dadurch erreicht, daß separate explosionsgeschützte Analysatoren in den Analyse-Häusern angeordnet werden und daß man versucht, das Analysehaus zu belüften, was jedoch bisher nur äußerst unzureichend oder mit einem sehr großen und kostspieligen Aufwand realisierbar ist. Deshalb werden Analyse-Häuser oftmals nur durch natürliche Ventilation beatmet. Für Häuser mit mehreren Analysator-Systemen ist auch eine Zwangsbelüftung durch explosionsgeschützte Ventilatoren bekannt. Zur Zwangsdurchspülung wird aus wirtschaftlichen Gründen Luft aus der Umgebung entnommen, die abhängig von ihrem Zustand gereinigt, gefiltert, getrocknet und aufbereitet werden muß. Sehr häufig ist auch eine Überwachung auf grenzüberschreitende Werte an explosionsfähigen und/oder toxischen Gemischen, beispielsweise Schwefelverbindungen, erforderlich. Diese Maßnahmen sind nicht nur sehr kostspielig, sondern sie unterliegen auch der Gefahr der nicht einwandfreien Funktion. Außerdem wird der Anwender auch durch eine Luftspülung nicht davon enthoben, explosionsgeschützte Analysator-Systeme einsetzen zu müssen, um diese hinsichtlich einer äußeren Explosionsgefahr zu schützen und um die Umgebung vor Explosionen zu schützen, die von den im Analysator-System enthaltenen zündfähigen Stoffen ausgehen können.

Es besteht nämlich auch bei Fremdbelüftung eines Analyse-Hauses, insbesondere wenn mehrere Analysator-Systeme vorhanden sind, die Gefahr, daß die beim Öffnen eines einzelnen Analysator-Systems mögliche Austrittsmenge an brennbaren Stoffen zur Überschreitung der unteren Explosionsgrenze des Luft/Gasgemisches führt. Auch ist das aus Sicherheitsgründen an sich erforderliche Abschalten der übrigen Analysator-Systeme und aller im Raum befindlichen elektrischen Einrichtungen für praktische Anwendungen in den meisten Fällen nicht akzeptabel.

Es ist daher unumgänglich, daß die einzelnen Analysatoren in einer explosionsgeschützten Ausführung vorhanden sein müssen. Als Explosionsschutzarten kommen dabei Ölkapselung, Überdruckkapselung, Sandkapselung, druckfeste Kapselung, erhöhte Sicherheit und Eigensicherheit in Betracht.

Nachteilig dabei ist, daß aufgrund der mechanischen Ausbildung der Explosionsschutzeinrichtungen, insbesondere bei einer druckfesten Kapselung, die Zugänglichkeit zu den inneren Einbauten des Analysators behindert ist. Das hat lange Reparaturzeiten und eine geringe Geräteverfügbarkeit zur Folge. Außerdem wird die Fehlersuche sehr aufwendig, weil die Analysatoren nach dem Öffnen der Explosionsschutzeinrichtungen entweder außer Funktion sein müssen oder weil statt dessen die Umgebung ständig auf Explosionsfreiheit zu überprüfen ist. Eine dritte aufwendige Möglichkeit besteht darin, durch besonderen Arbeitsschutz, beispielsweise durch eine Heiß-Arbeitsgenehmigung, für unfallfreie Reparatur und Fehlersuche zu sorgen. Ein weiterer Nachteil liegt darin, daß Signalleitungsdurchführungen durch ein Gehäuse mit druckfester Kapselung in der Anzahl begrenzt sind und daß alle Signaleinrichtungen für die übrigen Aggregate des Analysatorsystems einer Explosionsschutzart genügen müssen. Falls ein Auswerterechner vorhanden ist, muß dieser ebenfalls explosionsgeschützt aufgebaut sein, was wiederum große technische und kostspielige Vorkehrungen erfordert.

Ein weiterer Nachteil eines Analysator-Systems mit einem Analyse-Haus kann darin liegen, daß der Aufstellungsort aufgrund der Größe dieses Systems nicht frei wählbar ist. Da ein Analyse-Haus begehbar ist, müssen auch Fluchtwege für das Bedienungspersonal offengehalten werden. Aus Sicherheitsgründen darf ferner ein Zutritt durch eine Bedienperson nur erfolgen, wenn eine weitere Person zur Beaufsichtigung und zur Hilfestellung im Notfall bereitgestellt ist. Dies führt letzten Endes wieder dazu, daß das Analysator-System nicht in der gewünschten Weise in der Nähe des zu analysierenden Prozesses angeordnet werden kann und daher entsprechend lange Zuführungsleitungen und Pumpeinrichtungen vorgesehen werden müssen. Wegen der dabei zwangsläufig auftretenden Totzeiten und Totvolumen ist dies aus meßtechnischen Gründen nachteilig.

Dies hat insgesamt zur Folge, daß die bekannten Analysator-Systeme nicht in dem Umfang und an den Stellen eines Prozesses eingesetzt werden können, wie es aus wirtschaftlichen und meßtechnischen Gründen erstrebenswert wäre.

Der Erfindung liegt die **Aufgabe** zugrunde, ein Analysator-System der eingangs genannten Art anzugeben, welches wirtschaftlich hergestellt und betrieben werden kann und dessen Verfügbarkeit verbessert ist.

Diese Aufgabe wird dadurch gelöst, daß in einem selbsttragenden und abgedichteten Gehäuse mindestens ein das Gehäuseinnere im wesentlichen einnehmendes, ausziehbares Trägerelement angeordnet ist, daß das Trägerelement an seiner Frontseite fest mit einem die Auszieöffnung verschließenden ersten Türelement verbunden ist,
daß auf dem Trägerelement mindestens der Prozeß-Analysator, mindestens eine Probenaufbereitungseinrichtung, mindestens ein Hilfsstoff-System und eine uni- oder bidirektionale Kommunikationseinrichtung für elektrische Signale vorhanden sind,
daß das Trägerelement über flexible Ver- und Entsorgungsleitungen mit einem stationären Gehäuseteil verbunden ist, daß der Zugang zum Gehäuse mit einer Tür-Schließvorrichtung versehen ist, die über Überwachungseinrichtungen mit der Explosions- und/oder Umgebungs-Schutzeinrichtung in der Weise gekoppelt ist, daß ein Öffnen nur in einem sicheren Zustand möglich ist, und daß auf der Gehäuse-Außenseite mindestens eine Tastatur und Sichtstation für eine lokale Überprüfung des Gesamtsystems angeordnet ist.

Weiterbildungen der Erfindung ergeben sich aus den Unteransprüchen.

Insbesondere wegen des kleinen Gehäuses zeichnet sich die Erfindung durch ihre Wirtschaftlichkeit aus. Das Analysator-System kann werksseitig vollständig montiert und geprüft werden, so daß am Aufstellungsort nur ein minimaler Prüfungsund Montageaufwand erforderlich ist. Die Abmessungen gestatten es auch, in den meisten Fällen einen prozeßnahen Aufstellungsort zu finden, so daß keine langen und damit aufwendigen Zu-/ ableitungen sowei Prozeßrückführungs- und Druckerhöhungseinrichtungen erforderlich sind. Mit der Erfindung ist der wesentliche Vorteil erzielbar, daß ein Explosionsund Witterungsschutz mit einem einzigen Gehäuse erreicht werden kann, so daß eine explosionsgeschützte Zone im Gehäuse entsteht. Da somit der Explosionsschutz durch das Gehäuse gegeben ist, muß er nicht durch die Bauart der Analysatoren erreicht werden, so daß diese in Standardausführungen eingesetzt werden können.

Das hat zur Folge, daß kein spezielles Training des Bedienungspersonals durchgeführt werden muß, und daß keine Sonderersatzteile und Sonderwerkzeuge im Wartungsfall erforderlich sind.

Außerdem wird ein optimaler Schutz vor gefährlichen Stoffen erreicht. Da das Gehäuse dicht verschlossen werden kann und da nur eine relativ geringe Spülmenge erforderlich ist, ist es möglich, Wasch- und Spülzyklen unter Verwendung eines autarken Kreislaufs vorzusehen. Sommit können auch hochwirksame inerte Gase verwendet werden. Es ist auch eine weitgehende Autarkie von Hilfsstoffen realisierbar. Auch der Gestehungsaufwand und die Betriebskosten für eine Klimatisierung des Gehäuseinnenraumes kann minimiert werden.

Ein weiterer wesentlicher Vorteil der Erfindung liegt in dem kompakten Aufbau des Analysator-Systems im geschlossenen Zustand des Gehäuses. Andererseits ist eine optimale Zugänglichkeit für den Austausch, für Reparaturen und für die Wartung von Aggregaten sichergestellt, wenn das Trägerelement aus dem Gehäuse ausgezogen ist.

Ein weiterer wesentlicher Vorteil der Erfindung liegt in der hohen Verfügbarkeit des Analysator-Systems. In praktischen Versuchen hat sich gezeigt, daß eine Verfügbarkeit von 97% erzielt werden kann. Dies wird dadurch erreicht, daß die "explosionsfreie" Atmosphäre, in der alle Aggregate angeordnet sind, die Verwendung von Standardsensoren in praktisch beliebiger Anzahl erlaubt. Außerdem ist es möglich, selbst umfangreiche elektronische Auswerteeinheiten innerhalb des Gehäuses anzuordnen, ohne im Hinblick auf Explosionsschutz einer Einschränkung zu unterliegen. Mit Hilfe eines elektronischen Fehlerdiagnose-Systems können eine Funktionsüberwachung und eine Fehlersuche bei geschlossenem Gehäuse durchgeführt werden. Auch eine Datenfernübertragung der Diagnosedaten an einen zentralen Ort sowie eine kontinuierliche Überwachung der Meßsignale auf Plausibilität und Fehlergrenzen können durchgeführt werden. Ein Fehlerdiagnose-System reduziert die Reparaturzeit, in die normalerweise Fehlersuche und Fehlerlokalisierung eingeschlossen sind. Außerdem brauchen lediglich Mindestansprüche an das Diagnosepersonal gestellt werden.

Bei der Konzeption des Fehlerdiagnose-Systems kann auf erprobte Meßverfahren und Meßgeräte zurückgegriffen werden. Man ist nicht auf Geräte beschränkt, die zufällig in einer explosionsgeschützten Version vorhanden sind. Auch bei der Anordnung und Leitungsführung unterliegt man keinerlei Beschränkungen technischer oder kommerzieller Art, da preiswerte Standardausführungen eingesetzt werden können.

Die Verfügbarkeit wird auch dadurch erhöht, daß ein schneller Austausch von kompletten Analysator-Systemen möglich ist, um beispielsweise eine Großüberholung in einer Werkstatt durchzuführen. Zu diesem Zweck ist es lediglich erforderlich, das Türelement und das damit verbundene Trägerelement zu entfernen und durch ein anderes Exemplar zu ersetzen Systematische Fehler der Aggregate werden durch Innenraumklimatisierung reduziert. Zufällig auftretende Fehler werden sofort durch das Fehlerdiagnose-System detektiert und angezeigt.

Der explosionsgeschützte Innenraum bietet die Möglichkeit, praktisch frei wählbare Analysator-Kombinationen vorzusehen. Das hat den Vorteil, daß verbesserte kombinatorische Meßverfahren durchgeführt werden können und daß korrelative und redundante Messungen vorgenommen werden können.

Auch hinsichtlich des Bedienungs- und Umgebungsschutzes bietet die Erfindung vielfältige Vorteile. Durch die mit der Überwachungsvorrichtung kombinierte Verriegelung des Türelementes ist der Zugang zum Gehäuseinneren in der Weise kontrolliert, daß ein Öffnen in einem gefährlichen Zustand verhindert wird. Deshalb ist die Wartung auch von ungeschultem Personal durchführbar und der Explosionsschutz von der Sorgfalt des Service-Personals unabhängig. Durch das hochdichte, isolierende Gehäuse sind die Voraussetzungen für eine Umwälzung des inneren Gasvolumens geschaffen. Es können ohne weiteres die Schutzarten "Fremdbelüftung" und "Überdruckkapselung" für das gesamte Gehäuse verwendet werden. Diese Schutzarten bieten bei wirtschaftlichem Einsatz die geringsten Verwendungseinschränkungen. Durch die Verwendung von Inertgasen zur Spülung und als Zündschutz besteht keine Gefahr der Sättigung mit brennbaren Gasen. Das druckdichte Gehäuse erfor dert einen minimalen Zündschutzgasbedarf. Außerdem ist kein dauerndes Durchspülen und Ausgleich von Leckverlusten erforderlich. Durch einen leichten Überdruck im Innenraum kann ein Eindringen der äußeren Atmosphäre verhindert werden.

Bei der Verwendung eines Zündschutzgases können auch Kühl- bzw. Heizungseinrichtungen in nicht explosionsgeschützter Bauweise ausgeführt werden. Wenn ein autarker Wasserkreislauf zur Analysatorkühlung vorgesehen wird, können Einrichtungen zur Wasseraufbereitung, wie sie erforderlich sind, wenn Kühlwasser aus externen Quellen entnommen werden muß, entfallen.

Die aus Explosionsschutzgründen erforderliche Umwälzung des inerten Schutzgases zur Vermeidung von toten Ecken läßt sich einfach mit einer Klimatisierung verbinden, so daß unabhängig vom jeweils eingebauten Analysator-System, die im wesentlichen als kleine, komplexe Prozeßanlagen ausgeführt sind, und von den Umweltkonditionen eine geregelte Innenraumtemperatur gewährleistet werden kann.

Das Gehäuse erlaubt ferner den Einbau aller Hilfssysteme, die zur Funktion eines Analysators erforderlich sind unter denselben explosionsgeschützten und von den Umgebungsbedingungen, wie Wärme, Kälte, Korrosion usw. unabhängigen Zuständen.

Bezüglich des Gehäkuses kann zusammenfassend gesagt werden, daß damit gleichermaßen Schutz vor Explosion, Witterung und Kontakt mit gesundheitsschädlichen Stoffen erreicht wird. Durch die Türautomatik wird selbsttätig eine Prüf-, Inbetriebnahme- und Abschaltautomatik angeregt. Das Gehäuseinnere wird für den Operator erst zugänglich, wenn die programmierte Sicherheitsprozedur eine Freigabe der Türautomatik auslöst. Das Analysator-System geht erst dann in Betrieb, wenn ein adäquater Explosionsschutz im Gehäuseinneren hergestellt ist, d.h. wenn die Aggregate des gesamten Systems für den Operator nicht mehr zugänglich sind.

Neben den wirtschaftlichen Vorteilen und der hohen Verfügbarkeit können also auch die Minimierung von Unfallgefahren als Vorteil der Erfindung angeführt werden. Da das Diagnose-System alle Aggregate des gesamten Analysator-Systems umfaßt und durch eine entsprechende Redundanz eindeutig und frei von Eigenfehlern arbeitet, können Fehler einzelner Aggregate eindeutig lokalisiert werden. Somit ist, gewährleistet, daß das Öffnen und Schließen des Gehäuses und ein Inbetriebsetzen nur möglich ist, wenn das Analysator-System sich in einem sicheren Zustand befindet. Das schließt auch ein, daß heiße Oberflächen und elektrische Betriebsmittel auf die Fähigkeit zum Zünden eines brennbaren Gemisches kontrolliert werden und daß das Inertgas vor dem Öffnen des Schutzgehäuses mit Sauerstoff versetzt wird, um Gesundheitsgefahren auszuschließen. Umgekehrt darf sich vor dem Inbetriebsetzen kein Luftsauerstoff im Schutzgehäuse befinden. Da die Aggregate nicht separat mit Explosionsschutzeinrichtungen versehen werden müssen, ist kein Hantieren mit diesen Einrichtungen erforderlich. Es besteht daher auch keine Gefahr, daß beispielsweise beim Verschließen von druckfester Kapselung oder von Überdruckkapselungen für einzelne Aggregate Bedienungsfehler gemacht werden, die zu Unfällen führen können. Außerdem müssen offensichtlich auch keine montagerelevanten Bestimmungen beim Einbau von Geräten beachtet werden, die ansonsten beispielsweise bei der Schutzart Eigensicherheit unbedingt berücksichtigt werden müssen.

Im folgenden wird die Erfindung anhand eines Ausführungsbeispieles weiter beschrieben.

Figur 1 zeigt ein Bl;ockschaltbild eines Analysator-Systems.

Figur 2 zeigt schematisch einen Längsschnitt durch ein Analysator-System.

Figur 3 zeigt schematisch einen Querschnitt durch mehrere nebeneinander angeordnete Analysator-Systeme nach Fig. 2.

Figur 4 zeigt schematisch eine explosionsartige Darstellung des Analysator-Systems nach Fig. 2 und

Figur 5 zeigt schematisch eine perspektivische Ansicht mehrerer Analysator-Systeme nach den vorhergehenden Figuren.

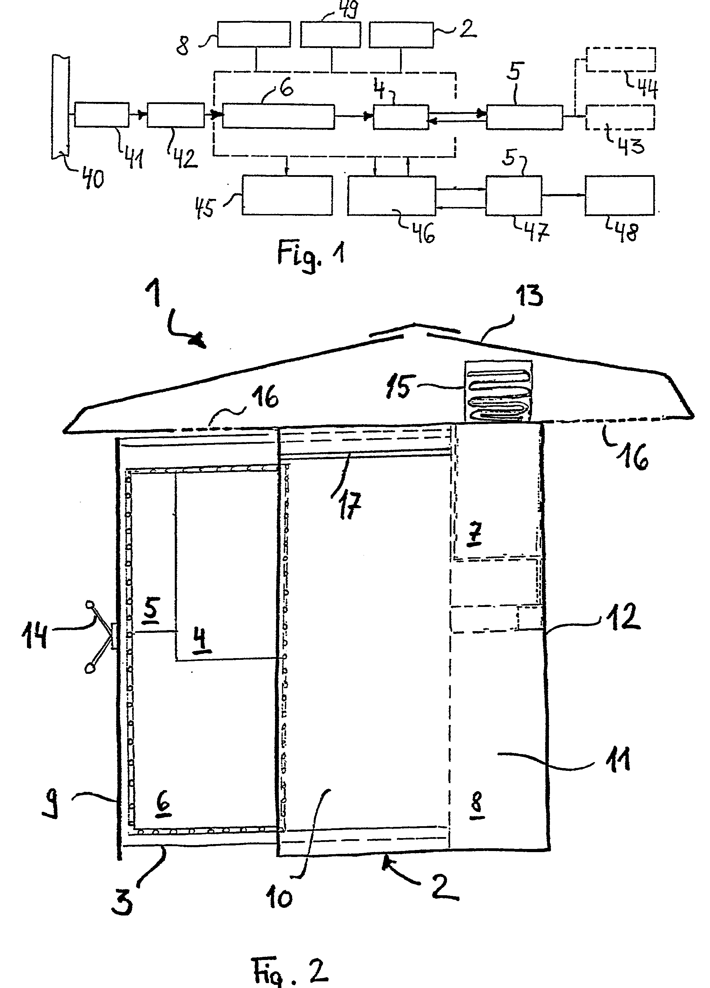

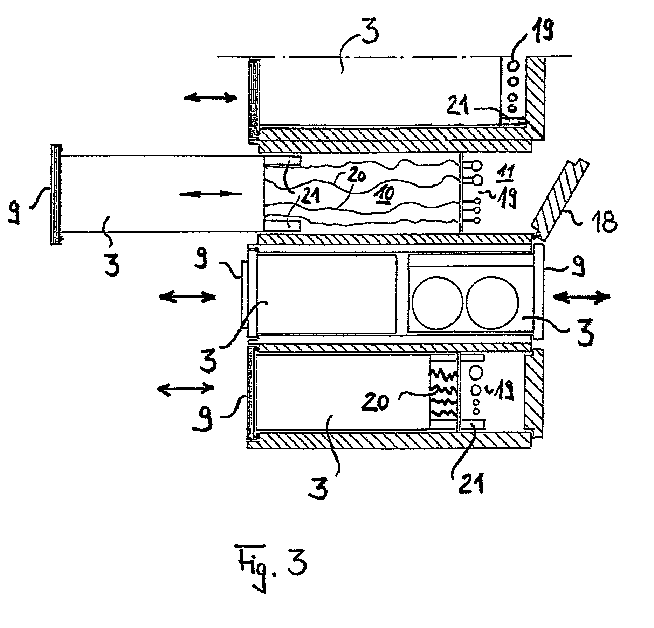

Die Fig. 1 veranschaulich rein schematisch die einzelnenen Komponenten und Untersysteme eines Prozeßanalyse-Systems, sowie das Zusammenwirken der einzelnen Komponenten zu einem Ganzen. Demnach erfolgt aus einem Prozeß 40 eine Stoffproben-Entnahme 41 und eine Probenzuführung 42 zu einer Probenaufbe reitung 6. Die aufbereiteten Proben werden einem oder mehreren Analysatoren 4 zugeführt, die über eine bidirektionale Leitung mit einer elektronischen Steuerung und Signalwandlereinheit 5 kommunizieren. Zwischen dem Analysator 4 und der Steuerung 5 werden in der einen Richtung Befehle und in der anderen Richtung Meßsignale ausgetauscht. Die Steuerung 5 kann mit einer Meßwarte 43 und einem Labor 44 in Verbindung stehen. Für den Betrieb des Analysator-Syustems sind mindestens ein Eichmedium aus einem Eichsystem 8, Hilfsstoffe 49 sowie Entsorgungseinrichtungen 45 erforderlich. Ferner gehört zum Analysator-System ein gasdichtes Gehäuse 2 sowie eine Fehlerdiagnoseanordnung 46, die über eine Steuerungs- und Signalverarbeitungseinheit 47 beispielsweise mit einer Meßwerkstatt 48 in Verbindung stehen kann. Die Fehlerdiagnoseanordnung 46 erhält von der Steuerungs- und Signalverarbeitungseinheit 47 Befehle und übermittelt in umgekehrter Richtung Diagnosesignale.

Gemäß Fig. 2 besteht das Analysator-System 1 aus dem selbsttragenden Gehäuse 2, aus einem ausziehbaren Trägerelement 3, aus einer Vielzahl von Analysatoren 4, aus der elektronischen Steuereinrichtung 5, aus der Probenaufbereitung 6, aus einem Kühlsystem 7 und aus dem Eichsystem 8. Die Fig. 2 veranschaulicht den Zustand, in welchem das Trägerelement 3 aus dem Gehäuse 2 herausgezogen ist, so daß es von zwei Seiten frie zugänglich ist, während die Frontseite von einer ersten Tür 9 eingenommen wird. In der Fig.2 ist aus Gründen der Übersichtlichkeit nicht wiedergegeben, daß das Trägerelement 3 auf Teleskopschienen gela gert ist. Das Trägerelement 3 dient als Montagerahmen für die Analysatoren 4, die elektronische Steuerung 5 und für die Probenaufbereitung 6. Es handelt sich dabei um technisch höherwertige Bauteile und Geräte. Die zum Betreiben des Analysator-Systems ansonsten notwendigen Hilfseinrichtungen, wei beispielsweise das Kühlsystem, oder reine Vorratsbehälter und Hilfsstoffleitungen, wie das Eichsystem, sind stationär im Gehäuse 2 untergebracht.

Obwohl diese Einrichtungen grundsätzlich auch auf dem Trägerelement 3 montiert sein können, kann es bei umfangreicheren Analysator-Systemen, wie in dem Beispiel der Fig.2 gezeigt, vorteilhaft sein, zur Aufnahme des Trägerelementes 3 einen ersten Bereich 10 im Gehäuse und für die stationären Einrichtungen einen zweiten Bereich 11 vorzusehen. Der zweite Bereich 11 ist über ein an der Frontseite angebrachtes zweites Türelement 12 zugänglich. Da davon ausgegangen werden kann, daß zum Bereich 11 sehr selten ein Zugang erforderlich ist und gewünscht wird, ist das zweite Türelement 12 vorzugsweise mit dem Gehäuse 2 lösbar verschraubt. Auf diese Weise kann auch mit relativ einfachen Dichtungsmaßnahmen ein ausreichend dichter Abschluß der Türöffnung erreicht werden. Zum Schließen des ersten Türelementes 9 sind mehrere pneumatisch betätigbare Zylinder oder gleichwertige Einrichtungen vorgesehen, welche gleichmäßig entlang des Umfanges der Türöffnung verteilt sind (nicht dargestellt). Durch Betätigen eines Steuerorgans 14 werden diese Einrichtungen gleichmäßig beaufschlagt, so daß das erste Türelement 9 gleichmäßig und fest gegen die entsprechenden Dichtungsflächen auf dem Gehäuse 2 gepreßt wird. Durch diese Maßnahmen gelingt es, die beiden vom ersten und und zweiten Türelement 9,12 verschlossenen Öffnungen des Gehäuses 2 zu einem sehr hohen Grad dicht zu verschließen, so daß das Gehäuse 2 insgesamt sehr gut gasdicht abgeschlossen ist.

Auf dem Gehäuse 2 ist ein vorkragendes Giebeldach 13 angeordnet. Das Dach 13 kragt an den Schmalseiten des Gehäuses 2 so weit über, daß es den Auszugsbereich des Trägerelementes 3 vollständig überdeckt und daß es auch den Zugang zu dem Bereich 11 schützt.

Unterhalb des Daches 13 oder in der Außenwand des zweiten Türelementes 12 ist ein Kondensor 15 vorgesehen, der auch großflächig ausgebildet sein kann und der mit dem Kühlsystem 7 in Verbindung steht. Unterhalb der vorkragenden Dachflächen sind wahlweise mit Filtern geschützte Lufteintrittsöffnungen 16 vorgesehen. Die eintretende Luft kann unter dem Dachfirst aus dem ansonsten geschlossenen Dachbereich entweichen. Innerhalb des abgeschlossenen Gehäuses 2 führt unterhalb der Behälterdecke ein Luftkanal 17 vom Kühlsystem 7 in den ersten Bereich 10, so daß ein Kreislauf entsteht, der in dem hier gezeigten Beispiel mit dem Uhrzeigersinn verläuft.

Fig. 3 verdeutlicht, wie ein in der Fig. 2 beschriebenes Analysator-System mit mehreren gleichartigen Systemen in raumsparender Weise nebeneinander in einer Reihe angeordnet werden kann. Die in Fig. 3 gezeigten Beispiele von Analysator-Systemen sollen unterschiedliche Ausgestaltungen zeigen. Das obere System ist nur mit einem einzigen Auszug versehen, welcher die gesamte Länge des Gehäuses 2 einnimmt. Entsprechend ist die Rückseite fest mit einer Wand verschlossen. Da der Zugang zu allen Komponenten über das Trägerelement 3 erfolgen kann, ist es möglich, das Gehäuse 2 mit seiner Rückwand beispielsweise an einer Wand aufzustellen.

Das an zweiter Stelle von oben gezeigte Beispiel weist ein Trägerelement 3 in einem ersten Bereich 10 und einen mit einer Schwenktür 18 verschließbaren zweiten Bereich 11 zur Anordnung von stationären Elementen auf.

Das dritte Analysator-System unfaßt zwei Trägerelemente 3, die jeweils aus einer der Schmalseiten des Gehäuses 2 in Pfeilrichtung bewegbar sind. Das unterste Analysator-System entspricht im wesentlichen dem an zweiter Stelle von oben eingezeichneten System. Es ist lediglich im geschlossenen Zustand des Gehäuses dargestellt. Außerdem ist anstelle einer Schwenktür eine verschraubbare Tür schematisch dargestellt.

An dem dem ersten Türelement 9 entgegen liegenden Ende der Trägerelemente 3 befinden sich die Anschlüsse 19 für alle Hilfsstoffleitungen und für diejenigen Leitungen, welche die zu analysierenden Stoffe zu-bzw. abführen. Unter Hilfsstoffen werden neben den für die Analyse unmittelbar notwendigen Stoffen auch Kühlmittel und Heizdampf verstanden. Diese Anschlüsse sind über flexible Leitungen 20 mit dem Trägerelement 3 verbunden. Die flexiblen Leitungen 20 umfassen ebenso Verbindungen zum Führen von elektrischen Steuer- und Meßsignalen als auch zur Zuführung von elektrischer Energie.

In der Darstellung der Fig. 3 sind auch die Teleskopschienen 21 erkennbar, auf welchen die Trägerelemente 3 geführt sind. Ferner ist aus dem Querschnitt der ersten Türelemente 9 ersichtlich, daß diese mehrlagig aufgebaut sind, wobei eine Innenlage aus einem wärmeisolierenden Material und die Außenschichten aus einem zur jeweiligen Atmosphäre resistenten Material bestehen. Dieser mehrlagige Aufbau entspricht im übrigen dem Aufbau der Gehäusewände.

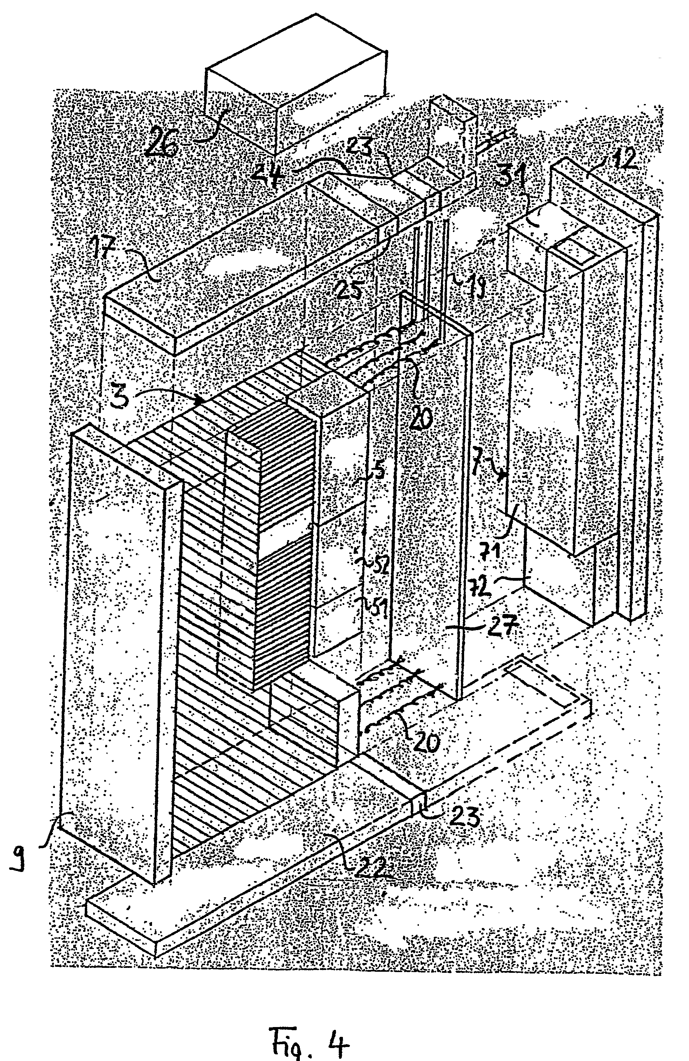

In der Fig. 4 werden die einzelnen Komponenten des Analysator-Systems weiter verdeutlicht, wobei aus Gründen der Übersichtlichkeit eine Explosions-Darstellung gewählt wurde. Auf dem Trägerelement 3 sind demnach als Ausstattung folgende Einbauten vorhanden:

Die Probenaufbereitung (nicht dargestellt), deren Einbauplatz durch eine schräge Strichelung angedeutet ist, einer oder mehrere Analysatoren (nicht dargestellt), deren Einbauplatz durch eine Querstrichelung gekennzeichnet ist, in Verbindung mit der Probenaufbereitung und den Analysator-Einheiten eine Meßeinrichtung (nicht dargestellt), eine Anschluß-Einheit 51 für elektrische Leitungen, eine Einheit 52 zum Verteilen und Absichern der elektrischen Versorgung und der elektrischen Signal- und Meßleitungen, und die elektronische Steuerung 5, welche auch ein Fehlerdiagnosesystem umfaßt. Fehlerdiagnosesysteme bestehen bekanntlich aus einer elektronischen Rechenanlage, welche über Sensoren mit den zu überwachenden Komponenten in Verbindung stehen.

Ferner umfaßt die elektronische Steuerung 5 eine Öffnungsund Schließ-Überwachung für das erste Türelement 9. Diese Überwachung ist ebenfalls mit Sensoren verbunden, über welche kritische Grenzwerte überwacht werden, bei deren Überschreitung ein Öffnen des ersten Türelementes 9 einen explosionsgefährdeten Zustand herbeiführen würde oder die Bedienperson in anderer Weise, beispielsweise durch den Austritt von toxischen Gasen gefährden würde. Die Öffnungs- und Schließ-Überwachung stellt daher sicher, daß der Verschluß des ersten Türelementes 9 erst dann freigegeben wird, wenn heiße Oberflächen unter die jeweilige Zündtemperatur abgekühlt, gegebenenfalls Spülund Rieseleinrichtungen betätigt, kanzerogene oder toxische Gase gegebenenfalls ausgewaschen sind und gegebenenfalls ein Überdruck oder Unterdruck auf Normaldruck gebracht worden ist. Auf diese Weise werden selbsttätig kritische Situationen ausgeschlossen. Umgekehrt ist bei der Inbetriebnahme des Analysator-Systems sichergestellt, daß eingetretener Luftsauerstoff ausgeblasen und alle Einrichtungen erst nach Überprüfung sämtlicher Sicherheitseinrichtungen in Funktion versetzt werden.

Wesentliche Sensoren sowohl für die Öffnungsund Schließüberwachung stellen die sogenannten Überwachungssensoren dar, die an allen kritischen Punkten innerhalb des Gehäuses 2 angeordnet sind. Wird eine Gefahr erkannt, so wird dies selbstverständlich auch über Anzeigeeinheiten außerhalb des Gehäuses angezeigt und ein akustischer oder optischer Alarm gegeben. Gleichzeitig werden die im Zusammenhang mit der Türöffnung beschriebenen Maßnahmen ausgeführt, um die kritische Situation zu entschärfen.

Derartige Überwachungssensoren (Bezugszeichen 23) können im oberen Luftkanal 17 und in einem unteren Luftkanal 22 an den Verbindungsstellen zum ersten Bereich 10 bzw. beim Ein/Austritt aus dem Kühlsystem 7 angeordnet sein. Im übrigen sind alle Leitungsdurchgänge und Leitungsaustritte aus dem Gehäuse explosionsgeschützt ausgebildet. Nach dem am Eingang der Luftkanäle 17 bzw. 22 liegenden Überwachungssensor 23 sind ein Ventilator 24 und anschließend ein Heizer 25 vorgesehen. Der Luftkanal 22 kann gleichzeitig als Bodenwanne ausgebildet sein oder in die Bodenwanne unmittelbar übergehen, um Tropfmengen aufzufangen, die möglicherweise innerhalb des Systems austreten. Außerdem kann der untere Luftkanal 22 zur Stabilisierung des Gehäuses 2 dienen.

Über dem oberen Luftkanal 17 ist in dem hier wiedergegebenen Beispiel eine Rieseleinrichtung 26 vorhanden, die nach dem Geschirr-Spüler-Prinzip arbeiten kann, mit welcher das Trägerelement 3 und alle darauf befindlichen Komponenten mit einer Spülflüssigkeit berieselt werden.

Im rechten Bereich des Gehäuses sind auf der Rückseite des zweiten Türelementes 12 die Kühleinrichtungen angebracht, die aus einem Luftkühler 71 und aus einem Wasser-Wärmetauscher 72 bestehen. Im dem hier dargestellten Beispiel dient das zweite Türelement 12 gleichzeitig als Kondensor zur Abführung der Kühlwärme. Ansonsten ist deutlich zu sehen, daß über die Kühleinrichtung 7 eine Verbindung zwischen dem unteren und oberen Luftkanal 22,17 für das Kühlmittel hergestellt wird. Außerdem ist in dem hier gezeigten Beispiel ein elektrischer Hauptanschluß 31 auf dem zweiten Türelement 12 angebracht und mit einem außen liegenden Hauptschalter (nicht dargestellt) verbunden. Zwischen dem rechten und linken Innenbereich ist eine Zwischenwand 27 angebracht.

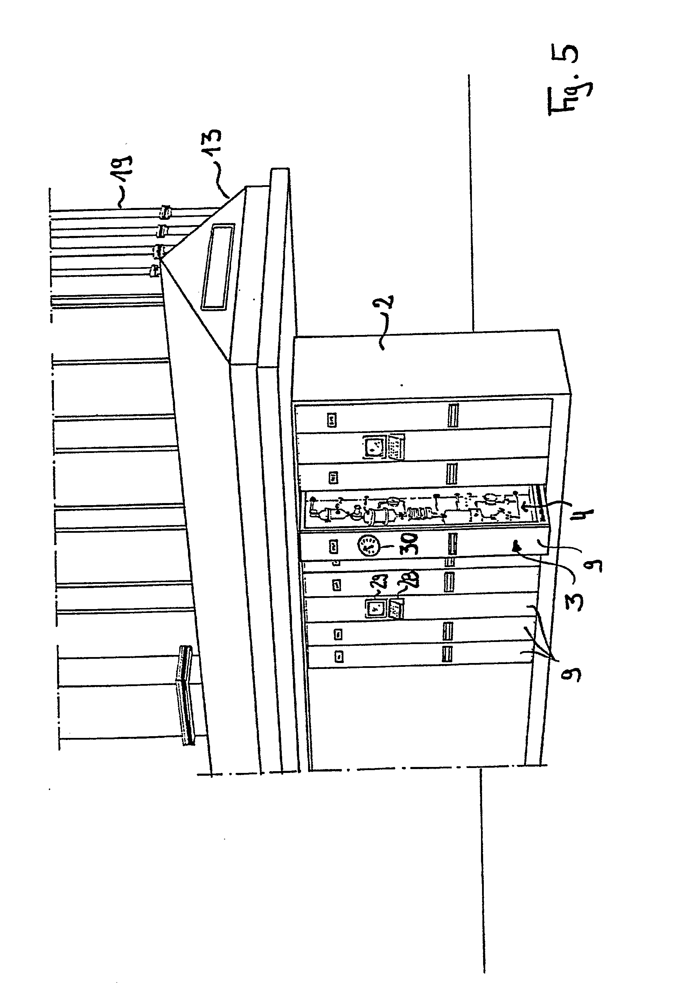

Die Fig. 5 veranschaulicht, wie mehrere Analysator-Systeme, gemäß Fig.3, aneinandergereiht und insgesamt zu einer kompakten Einheit verbunden werden können, ohne daß der Zugang zu den Analysatoren 4 eingeschränkt ist. Die Figur läßt auch erkennen, in welcher Weise die Anschlußleitungen 19 von dem zu analysierenden Prozeß an die Analysator-Systeme herangeführt werden kann. Wenn - wie hier gezeigt - eine Vielzahl von Trägerelementen 3 nebeneinander angeordnet sind, so erweist es sich als vorteilhaft, wenn auf der Außenseite der ersten Türelemente 9 Betätigungs-, Anzeige- und Überwachungselemente 28,29,30 angeordnet sind. Die Betätigungselemente 28 können insbesondere dazu dienen, die Ver- und Entsorgung mit Hilfsstoffen zu steuern.

Typische Abmessungen für das Gehäuse 2 sind beispielsweise 0,7 m x 1,2 m für die Grundfläche und 2,2 m für die Höhe.

**Patentansprüche**

1. Prozeßanalysator-System mit Aggregaten der Prozeßinstrumentierung/Automatisierung, mit mindestens einem Prozeßanalysator und mit einer Schutzeinrichtung zum Einsatz in einer gefährlichen Umgebung, beispielsweise einer brennbaren oder explosionsfähigen Umgebung und/oder zum Einsatz mit gefährlichen Stoffen, beispielsweise gesundheitsschädlichen Stoffen, dadurch gekennzeichnet, daß in einem selbsttragenden und abgedichteten Gehäuse (2) mindestens ein das Gehäuseinnere im wesentlichen einnehmendes, ausziehbares Trägerelement (3) angeordnet ist, daß das Trägerelement an seiner Frontseite fest mit einem die Ausziehöffnung verschließenden ersten Türelement (9) verbunden ist, daß auf dem Trägerelement (3) mindestens der Prozeß-Analysator, mindestens eine Probenaufbereitungseinrichtung, mindestens ein Hilfsstoff-System und eine uni- oder bidirektionale Kommunikationseinrichtung für elektrische Signale vorhanden sind, daß das Trägerelement (3) über flexible Ver- und Entsorgungsleitungen (20) mit einem stationären Gehäuseteil verbunden ist, daß der Zugang zum Gehäuse (2) mit einer Tür-Schließvorrichtung versehen ist, die über Überwachungseinrichtungen mit der Explosions- und/oder Umgebungs-Schutzeinrichtung in der Weise gekoppelt ist, daß ein Öffnen nur in einem sicheren Zustand möglich ist, und daß auf der Gehäuse-Außenseite mindestens eine Tastatur und ein Sichtstation für eine lokale Überprüfung des Gesamtsystems angeordnet ist.

2. Prozeßanalysator-System nach Anspruch 1, dadurch gekennzeichnet, daß das Trägerelement (3) vollständig aushängbar ist.

3. Prozeßanalysator-System nach einem der vorhergehenden Ansprüche, dadurch gekennzeichnet, daß die Gehäusewände einen mehrschichtigen Aufbau mit mindestens einer mittigen Isoliermaterial-Lage aufweisen.

4. Prozeßanalysator-System nach einem der vorhergehenden Ansprüche, dadurch gekennzeichnet, daß das erste Türelement (9) über pneumatische Zylinder oder gleichwertige mechanische oder hydraulische Einrichtungen schließbar ist.

5. Prozeßanalysator-System nach einem der vorhergehenden Ansprüche, dadurch gekennzeichnet, daß im Innern des Gehäuses (2) eine Rieseleinrichtung (26) oder eine Wascheinrichtung angeordnet ist.

6. Prozeßanalysator-System nach einem der vorhergehenden Ansprüche, dadurch gekennzeichnet, daß das Gehäuse (2) mit einer dichten Bodenwanne oder einem Auffangbehälter versehen ist.

7. Prozeßanalysator-System nach einem der vorhergehenden Ansprüche, dadurch gekennzeichnet, daß das Trägerelement (3) in der Schmalseite des Gehäuses (2) ausziehbar ist.

8. Prozeßanalysator-System nach einem der vorhergehenden Ansprüche, dadurch gekennzeichnet, daß auf dem Trägerelement (3) ein Fehlerdiagnose- System angeordnet ist, welches mit allen wesentlichen Analysatorund Hilfseinrichtungen verbunden ist.

9. Prozeßanalysator-System nach einem der Vorhergehenden Ansprüche, dadurch gekennzeichnet, daß im Gehäuseinnern ein Eichstoff-Behälter vorhanden ist.

10. Prozeßanalysator-System nach einem der vorhergehenden Ansprüche, dadurch gekennzeichnet, daß ein autarkes Kühlwassersystem integriert ist.

11. Prozeßanalysator-System nach einem der vorhergehenden Ansprüche, dadurch gekennzeichnet, daß das Gehäuse (2) in einen ersten Bereich (10) zur Auf nahme des Trägerelements (3) und in einen zweiten Bereich (11) zur Aufnahme von stationären Einrichtungen unterteilt ist.

12. Prozeßanalysator-System nach Anspruch 11, dadurch gekennzeichnet, daß das Gehäuse (2) mit einem zweiten Türelement (12) für den Zugang zum zweiten Bereich (11) versehen ist.

13. Prozeßanalysator-System nach einem der vorhergehenden Ansprüche, dadurch gekennzeichnet, daß das Gehäuse (2) mit einem vorkragenden Dach (13) versehen ist.

14. Prozeßanalysator-System nach Anspruch 13, dadurch gekennzeichnet, daß das Dach (13) vollständig über den Auszugsbereich des Trägerelements (3) kragt.

15. Prozeßanalysator-System nach Anspruch 14, dadurch gekennzeichnet, daß entlang des über den Auszugsbereich des Trägerelements (3) kragenden Daches eine Vorrichtung zum Aufhängen eines Schutzvorhanges vorhanden ist.

16. Prozeßanalysator-System nach einem der vorhergehenden Ansprüche, dadurch gekennzeichnet, daß der Gehäuseinnenraum klimatisiert ist.

## Claims

1. Process analyzer system with process instrumentation/automation units, with at least one process analyzer and a protective device for use in a hazardous environment, e.g. a flammable or explosive environment and/or for use with dangerous substances, e.g. substances which are harmful to health, characterized in that in a self-supporting, sealed casing (2) is arranged at least one extractable carrier element (3) substantially taking up the interior of the casing and the carrier element is firmly connected at its front to a first door element (9) closing the extraction opening, that on the carrier element (3) are provided at least the process analyzer, at least one sample preparation device, at least one adjuvant system and a unidirectional or bidirectional communication device for electric signals and that the carrier element (3) is connected via flexible supply and disposal lines (20) to a stationary casing part, that the access to the casing (2) is provided with a door closing device, which is coupled via monitoring means top the explosive and/or environmental protection device, that an opening is only possible in a safe state and that on the outside of the casing is provided at least one keyboard and an inspection station for the local inspection of the complete system.

2. Process analyzer system according to claim 1, characterized in that the carrier element (3) can be completely hung out.

3. Process analyzer system according to one of the preceding claims, characterized in that the casing walls have a multilayer structure with at least one central insulating material layer.

4. Process analyzer system according to one of the preceding claims, characterized in that the first door element (9) can be closed by means of pneumatic cylinders or equivalent mechanical or hydraulic devices.

5. Process analyzer system according to one of the preceding claims, characterized in that a sprinkling device (26) or a washing device is arranged in the interior of casing (2).

6. Process analyzer system according to one of the preceding claims, characterized in that the casing (2) is provided with a tight bottom trough or a receiving tank.

7. Process analyzer system according to one of the preceding claims, characterized in that the carrier element (3) is extractable in the narrow side of the casing (2).

8. Process analyzer system according to one of the preceding claims, characterized in that the carrier element (3) carries a fault diagnosis system connected to all the essential analyzer and auxiliary means.

9. Process analyzer system according to one of the preceding claims, characterized in that a calibration substance container is provided in the casing interior.

10. Process analyzer system according to one of the preceding claims, characterized in that an autarchic cooling water system is integrated.

11. Process analyzer system according to one of the preceding claims, characterized in that the casing (2) is subdivided into a first area (10) for receiving the carrier element (3) and into a second area (11) for receiving stationary means.

12. Process analyzer system according to claim 11, characterized in that the casing (2) is provided with a second door element (12) for access to the second area (11).

13. Process analyzer system according to one of the preceding claims, characterized in that the casing (2) is provided with a projecting roof (13).

14. Process analyzer system according to claim 13, characterized in that the roof (13) projects completely over the extraction area of the carrier element (3).

15. Process analyzer system according to claim 14, characterized in that a device for suspending a protective curtain is provided along the roof projecting over the extraction area of the carrier element (3).

16. Process analyzer system according to one of the preceding claims, characterized in that the casing interior is air conditioned.

**Revendications**

1. Système d'analyseur de procédés chimiques et autres, comportant des groupes d'instruments d'automatisation pour ces procédés, au moins un analyseur de procédés, et comportant également un dispositif de protection pour la mise en œuvre dans un environnement dangereux, par exemple un environnement inflammable ou sujet à donner lieu à explosion, et/ou pour la mise en œuvre avec des matières dangereuses, par exemple des matières nuisibles à la santé, système d'analyseur de procédés caractérisé en ce que dans un carter (2) auto-porteur et étanché est monté au moins un élément de support (3) retirable, occupant pour l'essentiel l'intérieur du carter, en ce que cet élément de support est, sur sa face frontale, relié rigidement à un premier élément de porte (9) obturant l'ouverture par laquelle l'élément de support peut être retiré, en ce que, sur l'élément de support (3), sont prévus au moins l'analyseur de procédés, au moins un dispositif de préparation d'échantillons, au moins un système de matière auxiliaire et un dispositif de communication uni – ou bidirectionnel pour des signaux électriques; en ce que l'élément de support (3) est relié à une partie fixe du carter par des conduits flexibles (20) d'admission et de sortie, en ce que l'accès au carter (2) est pourvu d'un dispositif de fermeture de porte qui est accouplé, par l'intermédiaire de dispositifs de contrôle, au dispositif de protection contre l'explosion et/ou l'environnement de telle manière qu'une ouverture n'est possible que dans un état de sécurité, et en ce que sur la face extérieure du carter sont montés au moins un clavier à touches et un poste de visée pour un contrôle local de l'ensemble du système.

2. Système d'analyseur de procédés selon la revendication 1, caractérisé en ce que l'élément de support (3) est entièrement décrochable.

3. Système d'analyseur de procédés selon l'une des revendications précédentes, caractérisé en ce que les parois du carter présentent une structure à plusieurs couches avec au moins une couche médiane de matériau isolant.

4. Système d'analyseur de procédés selon l'une des revendications précédentes, caractérisé en ce que le premier élément de porte (9) peut être fermé au moyen de cylindres pneumatiques ou de dispositifs mécaniques ou hydrauliques équivalents.

5. Système d'analyseur de procédés selon l'une des revendications précédentes, caractérisé en ce qu'à l'intérieur du carter (2) est monté un dispositif d'arrosage (26) ou un dispositif de lavage.

6. Système d'analyseur de procédés selon l'une des revendications précédentes, caractérisé en ce que le carter (2) est muni d'une cuve de fond étanche ou d'un récipient collecteur.

7. Système d'analyseur de procédés selon l'une des revendications précédentes, caractérisé en ce que l'élément de support (3) peut être retiré dans la face étroite du carter (2).

8. Système d'analyseur de procédés selon l'une des revendications précédentes, caractérisé en ce que sur l'élément de support (3) est monté un système de diagnostic d'erreurs qui est relié à tous les dispositifs d'analyseur et dispositifs auxiliaires essentiels.

9. Système d'analyseur de procédés selon l'une des revendications précédentes, caractérisé en ce qu'à l'intérieur du carter est prévu un récipient de matière de repère.

10. Système d'analyseur de procédés selon l'une des revendications précédentes, caractérisé en ce qu'un système autarcique d'eau de refroidissement est intégré.

11. Système d'analyseur de procédés selon l'une des revendications précédentes, caractérisé en ce que le carter (2) est divisé en une première zone (10) pour recevoir l'élément de support (3) et en une seconde zone (11) pour recevoir des dispositifs fixes.

12. Système d'analyseur de procédés selon la revendication 11, caractérisé en ce que le carter (2) est muni d'un second élément de porte (12) pour accéder à la seconde zone (11).

13. Système d'analyseur de procédés selon l'une des revendications précédentes, caractérisé en ce que le carter (2) est pourvu d'un toit (13) faisant ressaut.

14. Système d'analyseur de procédés selon la revendication 13, caractérisé en ce que le toit (13) fait saillie entièrement au-dessus de la zone où l'élément de support (3) peut être retiré.

15. Système d'analyseur de procédés selon la revendication 14, caractérisé en ce que le long du toit faisant saillie au-dessus de la zone où l'élément de support (3) peut être retiré, il est prévu un dispositif pour suspendre un rideau de protection.

16. Système d'analyseur de procédés selon l'une des revendications précédentes, caractérisé en ce que l'intérieur du carter est climatisé.

Fig. 1

Fig. 2

Fig. 3

Fig. 4

Fig. 5